# FASCICULE DE BREVET EUROPEEN

(11) **EP 0 426 577 B1**
(45) Date de publication et mention de la délivrance du brevet: **11.01.1995**
(21) Numéro de dépôt: 90420360.1
(22) Date de dépôt: 27.07.1990
(51) Int. Cl.: G05B 19/23, G05B 19/42

(54) **Procédé et dispositif pour déplacer un élément d'occultation jusqu'à des positions stables réglables et installation en faisant application**
Verfahren und Vorrichtung zum Verstellen einer Verdunkelungsanordnung in justierbaren Positionen und Installation zur Durchführung der Anmeldung
Method and device for moving a shade element to adjustable stable positions and installation applying such

(30) Priorité: 03.11.1989 FR 8914742
(43) Date de publication de la demande: 08.05.1991
(73) Titulaire: Société Anonyme SIMU, F-70103 Gray Cedex (FR)
(72) Inventeur: Niclas, Henri, F-21000 Dijon (FR); Viviant, Jean-Marc, F-70700 Choye (FR)
(74) Mandataire: Ropital-Bonvarlet, Claude

(56) Documents cités:
- DE-A- 2 800 968
- FR-A- 2 557 397
- US-A- 4 638 433

## Description

La présente invention concerne le domaine technique des moyens mis en oeuvre pour commander le déplacement d'un élément d'occultation, au sens général, tel qu'un volet roulant équipant, par exemple, une fenêtre ou une porte.

Généralement, un élément d'occultation est associé à un motoréducteur qui est calé en rotation sur le tube d'enroulement ou de déroulement de l'élément d'occultation. Le motoréducteur est piloté par un dispositif de contrôle dont la commande est assurée par des ordres provenant d'au moins un interrupteur destiné à être manoeuvré par un utilisateur souhaitant positionner l'élément d'occultation dans une position de fermeture ou d'ouverture et, quelquefois, dans une position intermédiaire. Les positions d'ouverture et de fermeture sont déterminées par des contacts de fin de course qui assurent, lors de leur coopération avec une butée, l'ouverture du circuit d'alimentation du motoréducteur. Les positions d'ouverture et de fermeture peuvent être modifiées en procédant à des réglages mécaniques au niveau de la tête du motoréducteur.

Le principe de commande d'un tel élément d'occultation ne donne pas, en pratique, entièrement satisfaction. En effet, il apparaît que les positions caractéristiques de l'élément d'occultation sont définies lors de l'installation de l'élément d'occultation, dans la mesure où elles dépendent d'un réglage des capteurs de fin de course sur le motoréducteur intégré à un caisson difficilement démontable après la pose des tapisseries. Il s'ensuit que l'utilisateur est limité dans les possibilités de positionnement automatique de l'élément d'occultation. De plus, il apparaît que les positions stables, prises par l'élément d'occultation, demandent parfois à être modifiées cycliquement, en raison, notamment, des phénomènes météorologiques. Le positionnement de l'élément d'occultation, à une valeur donnée d'ouverture ou de fermeture, ne peut être obtenu que par l'intermédiaire d'une commande manuelle effectuée par l'utilisateur.

Pour tenter de remédier à cet inconvénient, le brevet **FR-A-2 557 397** décrit un dispositif et un procédé pour la commande d'un moteur d'entraînement d'un volet roulant. Le dispositif comporte un capteur de détection de la rotation de l'arbre enrouleur du volet roulant. Le capteur délivre une impulsion électrique pour un segment déterminé de rotation de l'arbre enrouleur. Les impulsions électriques sont appliquées à un compteur dont les sorties sont chacune reliées à l'entrée d'une porte logique "ET". L'autre entrée des portes logiques est connectée par l'intermédiaire d'interrupteurs à un niveau logique haut. Les portes logiques sont destinées à commander l'alimentation de l'organe moteur de déplacement de l'élément d'occultation.

Si un tel dispositif permet de s'affranchir de l'utilisation de capteurs fin de course, pour le réglage des positions caractéristiques du volet, il s'avère qu'un tel dispositif ne permet pas de placer le volet dans toutes les positions possibles, entre des positions haute et basse qui puissent être réglées à volonté par l'utilisateur.

Il est connu, également, par le brevet **US-A-4 638 433**, un appareil de contrôle et de commande de l'ouverture et de la fermeture d'une porte coulissante de garage. Cet appareil comporte, notamment, un capteur apte à détecter la position occupée par l'organe moteur d'ouverture et de fermeture de la porte. Le capteur de position délivre des impulsions à un microprocesseur qui est apte à commander la rotation de l'organe moteur entre des positions d'ouverture et de fermeture de la porte.

Le microprocesseur commande l'arrêt de l'organe moteur, lorsque la valeur du signal délivré par le capteur atteint des valeurs préalablement enregistrées et correspondant aux positions d'ouverture et de fermeture de la porte. Un tel appareil ne prévoit pas de positionner la porte dans une position intermédiaire, ni de permettre une modification à volonté, par l'utilisateur, des réglages des positions stables d'ouverture, de fermeture et intermédiaire.

Il apparaît donc le besoin de pouvoir disposer de moyens permettant de placer automatiquement un élément d'occultation selon trois positions stables, réglables à volonté.

Pour satisfaire le besoin exprimé ci-dessus, le procédé de commande selon l'invention, pour un organe moteur de déplacement d'un élément d'occultation, comporte les étapes suivantes :
- détecter, par un capteur de position, la position occupée par l'organe moteur,
- enregistrer en mémoire les valeurs de la position réelle occupée par l'organe moteur et d'une première et d'une seconde positions extrêmes de l'élément d'occultation,
- et à commander la rotation de l'organe moteur en relation des ordres reçus d'au moins un moyen de commutation et correspondant, soit à un ordre de commande d'un premier type, destiné à déplacer l'élément d'occultation en vue d'atteindre la première position extrême, soit à un ordre de commande d'un second type destiné à déplacer l'élément d'occultation en vue d'atteindre la seconde position extrême.

Selon l'invention, le procédé consiste à :
. enregistrer, Lors de l'émission, par le moyen de commutation, d'un ordre de commande de mémorisation, respectivement, du premier et du second types, la valeur de la mémoire de position réelle dans une première et une seconde mémoires, correspondant respectivement à une première et à une seconde positions extrêmes de l'élément d'occultation,
. à enregistrer, lors de l'émission, par le moyen de commutation, d'un ordre d'enregistrement, la valeur de la mémoire de position réelle dans au moins une mémoire dite de position intermédiaire, correspondant à une position intermédiaire de l'élément d'occultation entre les deux positions extrêmes,
. et à piloter la rotation de l'organe moteur lors de l'émission d'un ordre de commande de position intermédiaire, jusqu'à ce que l'élément d'occultation occupe la position enregistrée dans la mémoire de position intermédiaire.

L'invention propose aussi un appareil de commande, pour au moins un organe moteur de déplacement d'un élément d'occultation, l'appareil comportant :
- un capteur de position ou de déplacement de l'organe moteur,
- et un dispositif de commande comprenant des moyens de programmation assurant la gestion des ordres de commande provenant, via un circuit interface, d'au moins un moyen de commutation et pemettant de piloter la rotation de l'organe moteur, en relation des ordres de commande reçus, par l'intermédiaire d'un circuit de commande de commutation de puissance,
   caractérisé en ce que le dispositif de commande comprend :
- un microcontrôleur comportant au moins :
   .. une mémoire dite de position réelle, contenant constamment la valeur de la position occupée par l'élément d'occultation,
   .. au moins une première et une seconde mémoires destinées à contenir, respectivement, la valeur de la première et de la seconde positions extrêmes de l'élément d'occultation,
   .. et une mémoire de position intermédiaire, destinée à contenir la valeur d'une position donnée intermédiaire de l'élément d'occultation, enregistrée lors de l'émission d'un ordre de commande provenant du moyen de commutation.

Selon une caractéristique supplémentaire, l'invention offre une installation de commande de **n** éléments d'occultation associé chacun à un organe moteur, soit par un moyen de commutation centralisé comportant un circuit interface sur lequel aboutit une dérivation du câble de commande de chacun des organes moteur, soit par une commande par bus comportant :
- pour chaque élément d'occultation :
   . un appareil de commande selon l'invention et inséré à l'intérieur d'un tube d'enroulement de l'élément d'occultation associé,
   . et un circuit de contrôle en réseau comportant un microcontrôleur à mémoire secourue assurant une gestion des ordres et associé :
      .. à un circuit de communication dialoguant avec le microcontrôleur intégré à l'appareil de commande,
      .. à au moins un circuit intégré de commande localisée recevant des ordres de commande d'au moins un interrupteur,
      .. à un circuit interface de réception d'ordres de commande spécifique,
      .. à un circuit d'adressage de l'appareil de commande devant être piloté,
      .. et un circuit interface de réseau associé à un bus de communication,
- et au moins un ordinateur dialoguant, par l'intermédiaire du bus de communication, à chaque circuit de contrôle en réseau associé à chacun des éléments d'occultation.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est un schéma montrant le fonctionnement d'un élément d'occultation piloté selon le procédé conforme à l'invention.

La **fig. 2** est une vue en coupe longitudinale illustrant l'appareil de commande selon l'invention inséré à l'intérieur du tube d'enroulement de l'élément d'occultation.

La **fig. 3** est un schéma-bloc fonctionnel montrant l'organisation du dispositif de commande selon l'invention.

Les **fig. 4 à 7** sont des organigrammes illustrant le procédé de commande selon l'invention.

La **fig. 8** représente un schéma fonctionnel montrant une installation équipée d'appareils de commande conforme à l'invention.

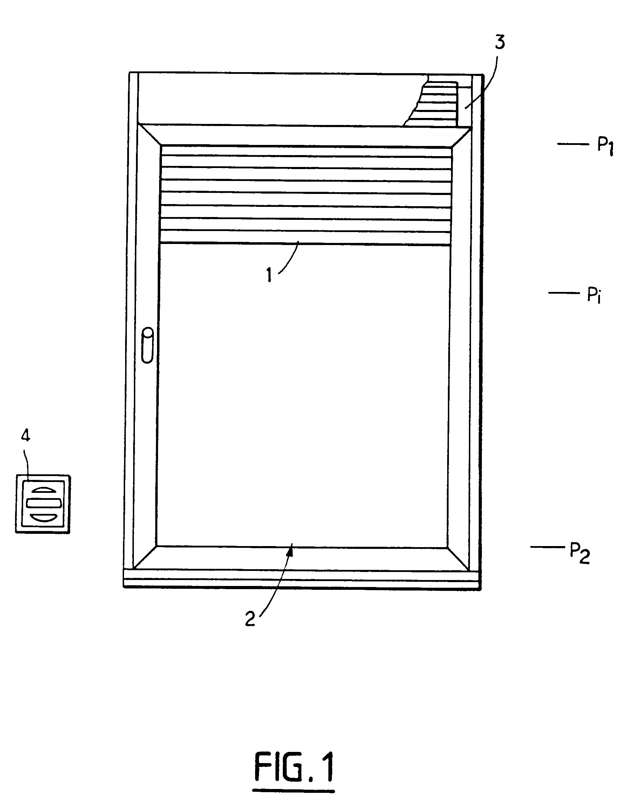

La **fig. 1** illustre, à titre d'exemple, un élément d'occultation **1**, tel qu'un volet roulant, équipant une ouverture **2**. L'élément d'occultation **1** est destiné à s'enrouler sur un tube **3** d'enroulement et de déroulement dont la rotation est commandée par l'intermédiaire d'un moyen de commutation **4**, tel qu'un interrupteur. Dans l'exemple illustré, l'élément d'occultation **1** est destiné à être déplacé selon une direction verticale, pour occuper une première et une seconde position extrêmes stables **P₁**, **P₂**, appelées, respectivement, position d'ouverture et position de fermeture. L'élément d'occultation **1** est apte, également, à occuper une position stable **Pi**, intermédiaire entre les deux positions **P₁**, **P₂**.

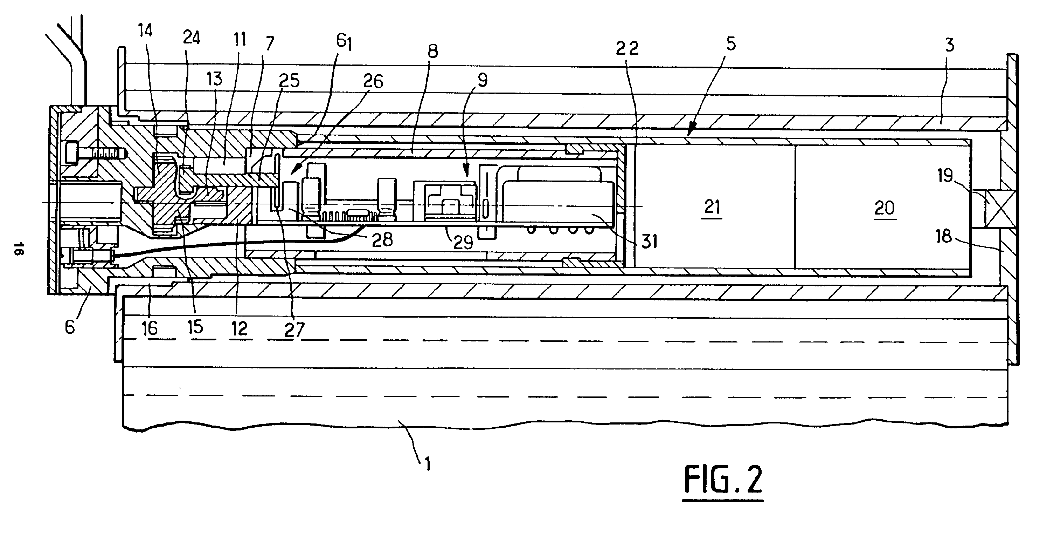

Tel que cela apparaît plus précisément à la **fig. 2**, le tube **3** est conçu pour contenir un appareil **5** de commande de l'enroulement de l'élément d'occultation **1**. L'appareil **5** comporte une tête **6** montée fixement, par l'intermédiaire de tous moyens convenables non représentés, sur une structure porteuse, telle que le mur de délimitation de l'ouverture **2**. La tête fixe **6** est aménagée pour présenter un alésage **7** débouchant sur une face transversale **6₁** de la tête et conçu pour assurer le montage d'un boîtier **8** contenant un dispositif de commande **9** assumant différentes fonctions qui seront décrites dans la suite de la description. L'alésage débouchant **7** est prolongé, partiellement, par un alésage **11** de réception d'un nez d'emboîtement **12** équipant le boîtier **8**. Le nez d'emboîtement **12** est destiné à recevoir un axe **13** de rotation d'une double roue dentée **14**, **15** montée à l'intérieur de la tête fixe **6**. La roue dentée **14** est adaptée pour engrener avec une bague dentée annulaire **16** entourant, extérieurement, la tête fixe **6**. La bague annulaire **16** est calée en rotation avec le tube d'enroulement **3** de l'élément d'occultation **1**.

Le tube d'enroulement **3** est muni d'un flasque **18**, à sa partie terminale opposée de celle portant la bague annulaire **16**. Le flasque **18** est calé en rotation sur l'arbre de sortie **19** d'un réducteur **20** commandé en rotation, par l'intermédiaire d'un organe moteur **21** du type électrique.

L'organe moteur **21** et le réducteur **20** sont montés côte à côte à l'intérieur d'un fourreau tubulaire **22** qui entoure, également, le boîtier **8**. Le motoréducteur **20**, **21** assure la commande en rotation du tube d'enroulement **3** qui entraîne la double roue dentée **14**, **15**, par l'intermédiaire de la bague annulaire **16**. La roue dentée **15** est destinée à coopérer avec un pignon de sortie **24** faisant saillie du nez d'emboîtement **12** du boîtier **8**. Le pignon de sortie **24** est monté sur un axe **25** dont la rotation est détectée, par l'intermédiaire d'un capteur **26** de position ou de déplacement faisant partie intégrante du dispositif de commande **9**.

Le capteur **26** est destiné à détecter la rotation du tube **3** entraîné par l'organe moteur **21**, en vue de déterminer sa position et, par suite, celle de l'élément d'occultation **1**. Selon un exemple de réalisation, le capteur **26** est du type incrémental et se trouve constitué par un disque optique **27** monté solidaire de l'axe **25**. Le disque **27** est placé en relation de deux détecteurs optiques **28** adaptés pour déceler chaque déplacement élémentaire du disque pour chacun desquels une impulsion est émise, en vue d'être comptée ou décomptée, selon le sens de rotation détecté. Les détecteurs optiques **28** sont fixés sur une carte de circuit imprimé **29** insérée dans le boîtier **8** et supportant les moyens assumant les différentes fonctions du dispositif de commande **9**.

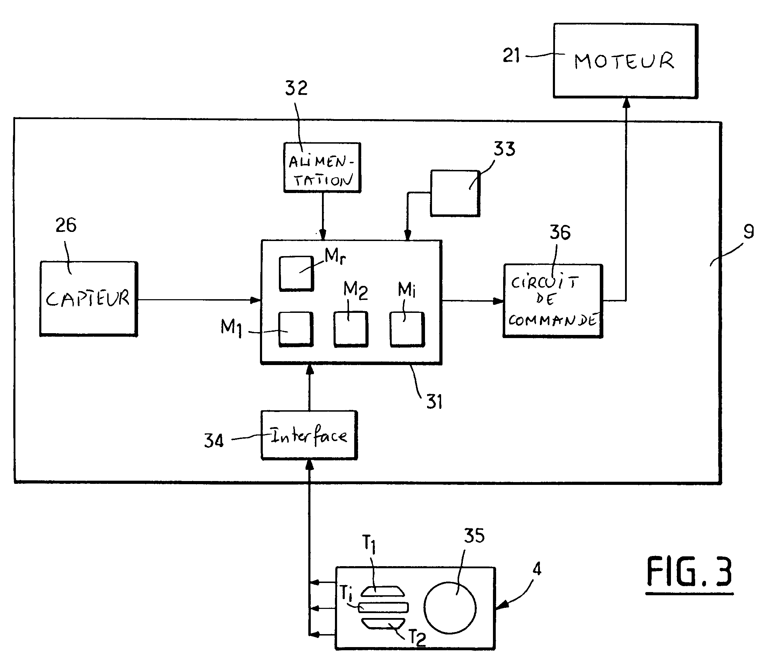

Tel que cela apparaît plus précisément à la **fig. 3**, le dispositif de commande **9** comporte un microcontrôleur **31**, associé à une alimentation générale **32** et à une alimentation de secours **33** assurant la sauvegarde des mémoires volatiles, en cas de défaillance de l'alimentation **32**. Le microcontrôleur **31** reçoit les informations de position du capteur **26** et les enregistre constamment dans une mémoire **Mr**, dite de position réelle. La mémoire **Mr** contient donc, à chaque instant, la valeur de la position occupée par l'organe moteur **21** ou par le tube **3** et, par suite, celle prise par l'élément d'occultation **1**. Le microcontrôleur **31** reçoit, également, par l'intermédiaire d'un circuit interface **34**, les ordres de commande issus de l'interrupteur **4** qui est associé, avantageusement, à une batterie **35** permettant d'alimenter l'alimentation de secours **33**. Dans l'exemple illustré, l'interrupteur **4** comporte une touche **T₁**, dite de montée, une touche **T₂**, dite de descente, et une touche **Ti**, dite intermédiaire, permettant au moins de positionner l'élément d'occultation **1**, respectivement, dans les positions d'ouverture **P₁**, de fermeture **P₂** et intermédiaire **Pi** et d'enregistrer de telles positions.

Le microcontrôleur **31** comporte une première **M₁** et une seconde **M₂** mémoires destinées à contenir, respectivement, la valeur de la première **P₁** et de la seconde **P₂** positions extrêmes de l'élément d'occultation **1**. De préférence, le microcontrôleur comporte au moins une mémoire **Mi** de position intermédiaire destinée à contenir la valeur d'une position donnée intermédiaire **Pi**.

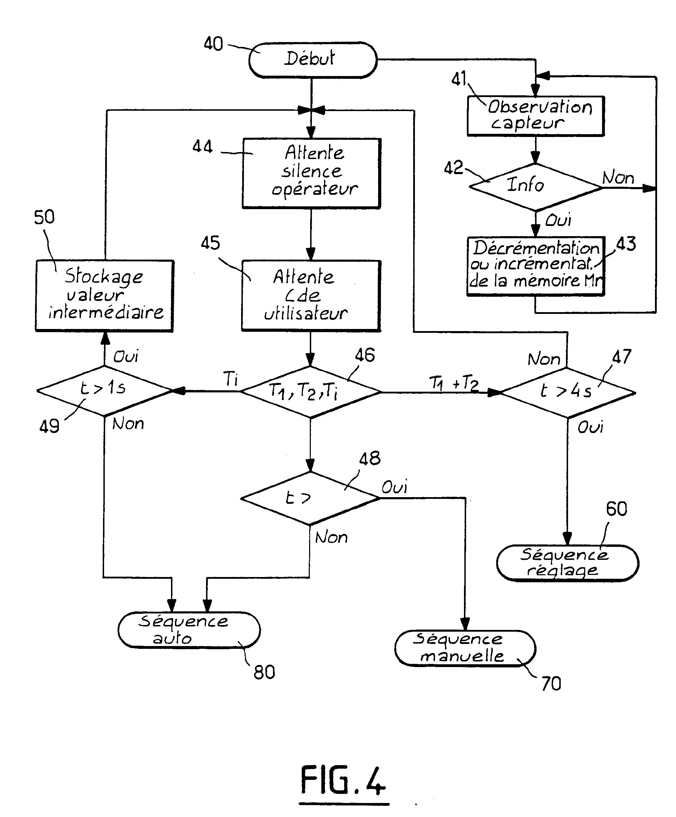

Le microcontrôleur **31** comporte, également, une mémoire non volatile intégrant des moyens de programmation qui assurent la gestion des mémoires volatiles, ainsi que des ordres de commande issus de l'interrupteur **4**, de manière à permettre de piloter l'organe moteur **21**, par l'intermédiaire d'un circuit **36** de commande de commutation de puissance. Les moyens de programmation sont adaptés pour mettre en oeuvre le procédé de commande de l'organe moteur, tel que décrit par son organigramme sur les **fig. 4 à 8**.

Conformément à la **fig. 4**, au cours d'une étape **40** de début, le microcontrôleur **31** scrute en continu le capteur **26** (étape **41**) pour déceler la présence ou non d'une donnée issue du capteur (étape **42**). Si la présence d'une donnée est détectée, la mémoire **Mr**, dite de position réelle, est incrémentée ou décrémentée, en relation du sens de rotation de l'organe moteur (étape **43**).

L'étape de début **40** est suivie par une étape **44** d'attente d'une durée choisie, pendant laquelle aucun ordre de commande, issu de l'interrupteur **4**, n'est pris en compte. La fonction de cette étape **44** est donc d'attendre une remise à zéro de tous les ordres de commande. Cette étape d'attente **44** est suivie par une étape **45**, au cours de laquelle les états des ordres de commande, issus de l'interrupteur **4**, sont scrutés pour être ensuite analysés (étape **46**). Selon un exemple de réalisation, si l'ordre de commande est constitué par l'appui simultané sur les touches **T₁**, **T₂**, pendant une durée qui est inférieure à une valeur donnée, par exemple 4 secondes (étape **47**), un retour à l'étape **44** est effectué. Si l'appui simultané sur les touches **T₁**, **T₂** est prolongé pendant une durée supérieure à 4 secondes, un mode de réglage des positions **P₁**, **P₂** peut être entrepris (étape **60**).

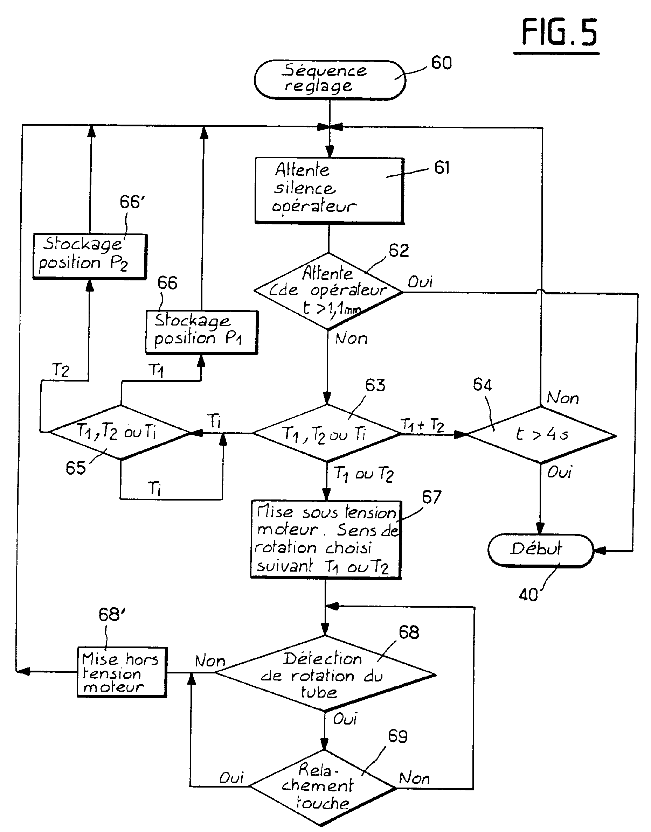

Tel que cela apparaît plus précisément à la **fig. 5**, après une étape **61** pendant laquelle aucun ordre de commande n'est pris en compte, un test (étape **62**) est effectué pour déterminer si l'ordre de commande, qui suit les ordres de commande permettant d'entrer dans le mode réglage, est émis dans un intervalle de temps inférieur à une valeur déterminée. Si l'intervalle de temps, entre ces ordres est supérieur à la valeur déterminée, à savoir, par exemple 1,1 minute, un retour à l'étape de début **40** est effectué. Si l'intervalle de temps entre ces ordres est inférieur à la valeur déterminée, la nature des ordres de commande suivants est détectée selon une étape **63.**

Si l'ordre de commande provient d'un appui simultané sur les touches **T₁**, **T₂** et se prolonge pendant une durée supérieure à une valeur choisie, par exemple égale à 4 secondes (étape **64**), le mode réglage est interrompu (retour à l'étape **40**). Si l'appui simultané sur les touches **T₁**, **T₂** se produit pendant un temps inférieur à la valeur choisie, un retour au commencement du mode réglage est effectué.

Si l'ordre de commande est issu de la touche **Ti**, le programme teste la nature de l'ordre de commande suivant, qui est considéré comme un ordre de commande de mémorisation (étape **65**). Si l'ordre de commande suivant provient de la touche **T₁**, la valeur de la mémoire de position réelle **Mr** est alors immédiatement enregistrée dans la mémoire **M₁** (étape **66**), tandis que si l'ordre de commande est issu de la touche **T₂**, la valeur de la mémoire de position réelle **Mr** est enregistrée dans la mémoire **M₂** (étape **66′**).

Si l'ordre de commande testé à l'étape **63** provient de la touche **T₁** ou **T₂**, l'organe moteur **21** est commandé en rotation pour assurer, respectivement, le déplacement de l'élément d'occultation **1** en direction de la position d'ouverture **P₁** ou de fermeture **P₂** (étape **67**). Le sens de rotation est déterminé en relation de la touche appuyée **T₁** ou **T₂** et résulte de la comparaison effectuée entre la mémoire dite de position réelle **Mr** et la mémoire correspondante **M₁** ou **M₂**. Si une absence de rotation de l'organe moteur est détectée (étape **68**), l'alimentation de l'organe moteur **21** est coupée (étape **68′**) avant le retour à l'étape **61**. Si l'organe moteur tourne et si la touche **T₁** ou **T₂** est relâchée (étape **69**), un retour à l'étape **61** est effectué en exécutant l'étape **68′** assurant la mise hors tension de l'organe moteur. Tant que le relâchement de la touche **T₁** ou **T₂** ne se produit pas, la rotation de l'organe moteur **21** est détectée (étape **68**).

Conformément à la **fig. 4**, si l'ordre de commande, déterminé à l'étape **46**, est issu de la touche **T₁** ou **T₂**, un test de la durée d'appui sur la touche est effectué au cours de l'étape **48**. Si l'appui sur l'une ou l'autre des touches **T₁** ou **T₂** dépasse un temps déterminé (impulsion longue), le fonctionnement de l'organe moteur peut s'effectuer en mode séquence manuelle (étape **70**).

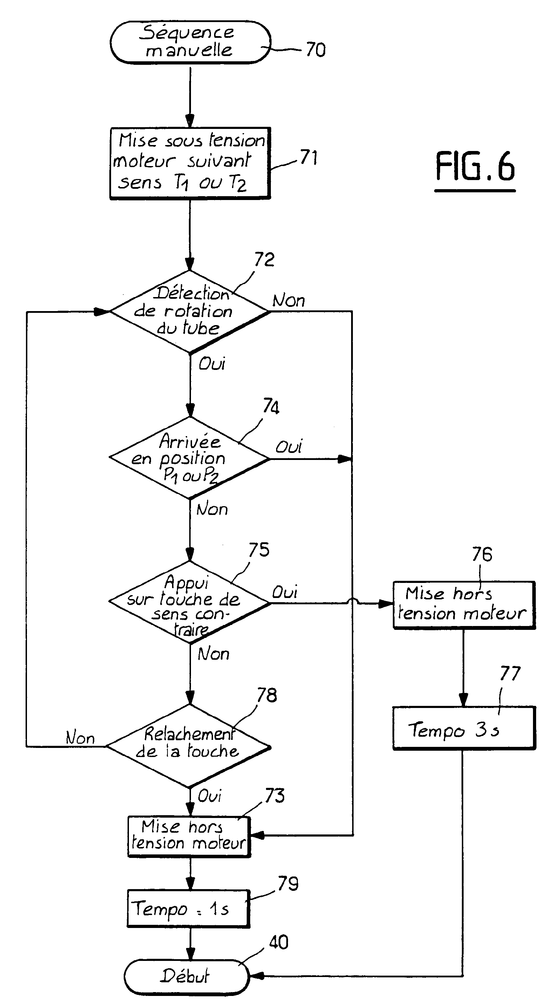

Tel que cela apparaît plus précisément à la **fig. 6**, la séquence manuelle comporte une étape **71** de mise sous tension de l'organe moteur **21**, selon un sens de rotation déterminé par la touche **T₁** ou **T₂** et suivant le résultat de la comparaison effectuée entre la valeur de la mémoire réelle et celle de la première ou de la seconde mémoire. Si la rotation de l'organe moteur **21** n'est pas détectée (étape **72**), l'alimentation de l'organe moteur est interrompue (étape **73**). Si l'organe moteur **21** est entraîné en rotation, une comparaison est effectuée (étape **74**), entre la mémoire, dite de position réelle **Mr** et soit la mémoire **M₁** ou soit la mémoire **M₂** pour déterminer si l'élément d'occultation **1** est arrivé à sa position d'ouverture **P₁** ou à sa position de fermeture **P₂**. Si tel est le cas, l'alimentation de l'organe moteur est coupée (étape **73**). Si la valeur de la mémoire, dite de position réelle **Mr**, n'est pas identique à la valeur de la première mémoire **M₁** ou de la seconde mémoire **M₂**, une étape **75** est effectuée pour déterminer si un appui sur la touche de sens contraire intervient. Dans l'affirmative, l'alimentation du moteur est coupée (étape **76**) et une temporisation de sécurité est mise en oeuvre pendant une durée déterminée, par exemple de 3 secondes (étape **77**), pendant laquelle aucun ordre de commande n'est pris en compte, avant le retour à l'étape de début **40**. Une telle étape permet donc de prendre en compte uniquement le premier appui sur une touche qui est considéré comme un arrêt d'urgence. Si aucun appui n'est détecté pendant l'étape **75**, un test (étape **78**) est mis en oeuvre pour déterminer si la touche **T₁** ou **T₂** est relâchée. Si la touche considérée n'est pas relâchée, la phase **72** est exécutée de nouveau. Si la touche considérée est relâchée, l'étape **73** de coupure de l'alimentation de l'organe moteur est mise en oeuvre, puis suivie par une étape de temporisation **79** permettant d'obtenir un temps d'arrêt de l'organe moteur, avant l'émission d'ordres de commande suivants.

Conformément à la **fig. 4** et en relation avec l'étape **48**, si l'appui sur l'une ou l'autre des touches **T₁**, **T₂** est inférieur à un temps déterminé (impulsion brève), le fonctionnement de l'organe moteur **21** peut s'effectuer selon le mode séquence automatique (étape **80**).

Il est à noter que l'étape **80** est aussi exécutée si la touche **Ti** a été appuyée pendant une durée inférieure à une valeur donnée correspondant à une impulsion brève (étape **49**). Si l'appui sur la touche **Ti** se produit pendant une durée supérieure à la valeur donnée, par exemple 1 seconde, la valeur de la mémoire de la position réelle **Mr** est enregistrée dans la mémoire intermédiaire **Mi** (étape **50**) avant l'exécution de l'étape **44**.

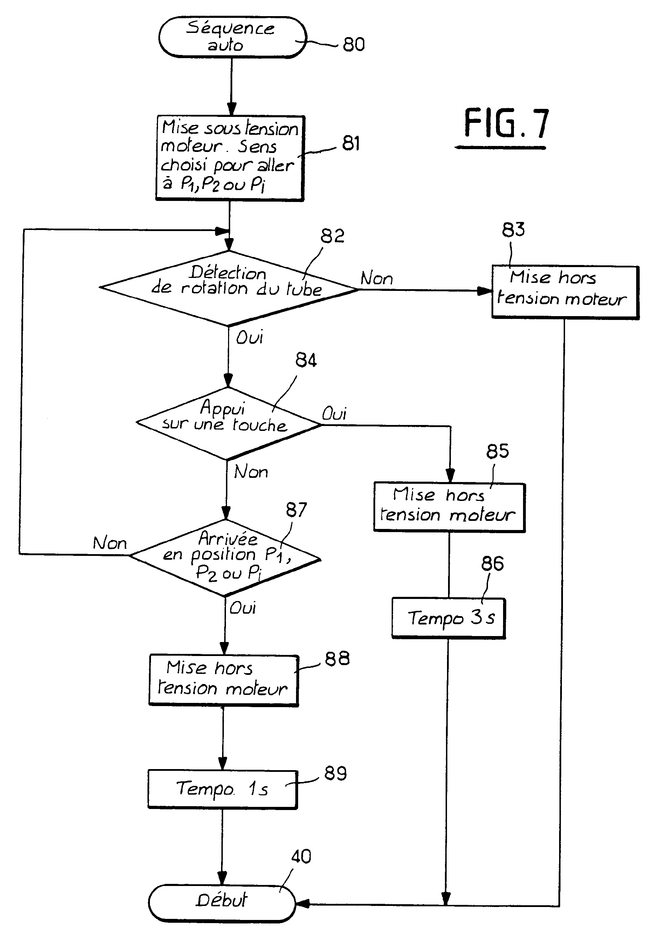

Tel que cela apparaît plus précisément à la **fig. 7**, le mode séquence automatique (étape **80**) débute par une mise sous tension de l'organe moteur **21** (étape **81**). Le sens de rotation est déterminé en relation de la touche appuyée **T₁**, **T₂** ou **Ti** et résulte de la comparaison effectuée entre la mémoire, dite de position réelle **Mr** et la mémoire correspondante **M₁**, **M₂** ou **Mi**. Si une absence de rotation de l'organe moteur est décelée (étape **82**), l'alimentation de l'organe moteur est coupée (étape **83**), avant le retour à l'étape de début **40**. Si une rotation est détectée, une étape **84** est exécutée au cours de laquelle les touches de commande sont scrutées. Si un ordre de commande est émis par au moins l'une des touches **T₁**, **T₂**, **Ti**, l'alimentation du moteur est interrompue (étape **85**) et une étape **86** de temporisation est exécutée avant le retour à l'étape de début **40**, de manière à ce que le premier appui soit considéré comme un arrêt d'urgence. Si aucun ordre de commande n'est produit, un test est effectué pour savoir si l'élément d'occultation **1** est arrivé dans la position commandée **P₁**, **P₂** ou **Pi** (étape **87**).

A cet effet, une comparaison est effectuée, entre la valeur de la mémoire **Mr** et la valeur de la mémoire correspondante **M₁**, **M₂** ou **Mi**. Si les deux valeurs sont différentes, l'étape **82** est de nouveau exécutée. Lorsque les deux valeurs sont identiques, l'alimentation de l'organe moteur est interrompue (étape **88**) et une étape de temporisation **89** est exécutée avant l'étape de début **40** pour laisser subsister un intervalle de temps entre deux ordres de commande successifs, de manière à éviter tout "stress" mécanique à l'organe moteur.

Le procédé de commande décrit ci-dessus permet donc, à un utilisateur, de régler à volonté les positions d'ouverture, de fermeture et intermédiaire d'un élément d'occultation **1**. De plus, selon l'exemple de réalisation illustré, la commande et le réglage des positions peut s'effectuer uniquement à l'aide de trois touches d'un interrupteur. Ainsi, un appui considéré comme impulsionnel, intervenant sur la touche **T₁**, **T₂** ou **Ti**, permet d'obtenir le positionnement de l'élément d'occultation **1**, respectivement, dans la position **P₁**, **P₂** ou **Pi** (mode séquence automatique). Un appui prolongé sur la touche **T₁**, **T₂** permet d'assurer la montée ou la descente de l'élément d'occultation **1** jusqu'au relâchement de la touche **T₁** ou **T₂** correspondante (mode séquence manuelle), la montée ou la descente de l'élément **1** ne pouvant être réalisée qu'entre les positions extrêmes **P₁** et **P₂**. La distinction, entre les modes de commande manuelle et automatique, s'effectue au niveau du temps d'appui sur les touches.

L'entrée dans le mode réglage s'effectue, dans l'exemple de réalisation décrit ci-dessus, par un appui simultané sur les touches **T₁** et **T₂** pendant une durée supérieure à 4 secondes. Le réglage de la position extrême **P₁** ou **P₂** est obtenu par un appui sur la touche **T₁** ou **T₂** permettant d'obtenir la montée ou la descente de l'élément d'oscillation **1**. Lorsque l'élément d'occultation 1 occupe la position extrême choisie, le relâchement de la touche appuyée permet de couper l'alimentation du moteur. La mémorisation de la position **P₁** ou **P₂** s'effectue alors par un appui sur la touche **Ti**, puis un appui sur la touche **T₁** pour la position **P₁** ou **T₂** pour la position **P₂**. La sortie du mode réglage s'effectue, soit automatiquement après un intervalle de temps de 1,1 minute pendant lequel aucun ordre de commande n'apparaît ou soit par un appui simultané sur les touches **T₁** et **T₂** pendant une durée supérieure à 4 secondes.

Il est à noter que le réglage de la position intermédiaire **Pi** s'effectue par un appui prolongé sur la touche **Ti** pendant une durée supérieure à 1 seconde, de manière que la position occupée par l'élément d'occultation **1** soit enregistrée dans la mémoire **Mi**. De plus, la position intermédiaire **Pi** n'est accessible qu'en dehors du mode réglage.

Bien entendu, il peut être prévu que chaque ordre de commande résulte d'une combinaison différente d'appui des touches ou provienne de la mise en oeuvre d'un interrupteur comportant un nombre de touches différent de trois. D'une manière générale, il convient de noter que la mise en oeuvre de toutes les fonctions décrites ci-dessus, nécessite l'émission d'ordres de commande d'un premier et d'un second type permettant de déplacer l'élément d'occultation **1**, de façon automatique ou manuelle, respectivement, pour ou en vue d'atteindre sa première position ou sa seconde position extrême. De plus, des ordres de commande de mémorisation, respectivement d'un premier ou d'un second type, doivent être émis pour enregistrer les positions extrêmes **P₁**, **P₂**. Par ailleurs, un ordre de commande d'enregistrement doit permettre de mémoriser la position intermédiaire et un ordre de commande intermédiaire doit être disponible pour placer l'élément d'occultation dans la position intermédiaire **Pi**.

Bien entendu, il peut être envisagé de commander un élément d'occultation **1** par l'intermédiaire de plusieurs interrupteurs. Dans le même sens, il peut être prévu de commander, de manière générale, **n** organes moteurs associés chacun à un élément d'occultation **1**, par l'intermédiaire de un ou de plusieurs interrupteurs associé à un circuit interface sur lequel aboutit une dérivation du câble de commande de chacun des organes moteurs. Par ailleurs, il doit être considéré que le microcontrôleur **31** peut recevoir des ordres de commande provenant de moyens de commutation, au sens général, constitués par des blocs de commutation asservie, tels que, par exemple, des horloges ou des blocs pilotés par des capteurs de détection de phénomènes météorologiques.

Il doit être noté que la description qui précède a été effectuée en relation d'un élément d'occultation **1** déplaçable verticalement. Toutefois, il doit être considéré que le procédé de commande selon l'invention peut s'appliquer, également, à un élément d'occultation à déplacement horizontal.

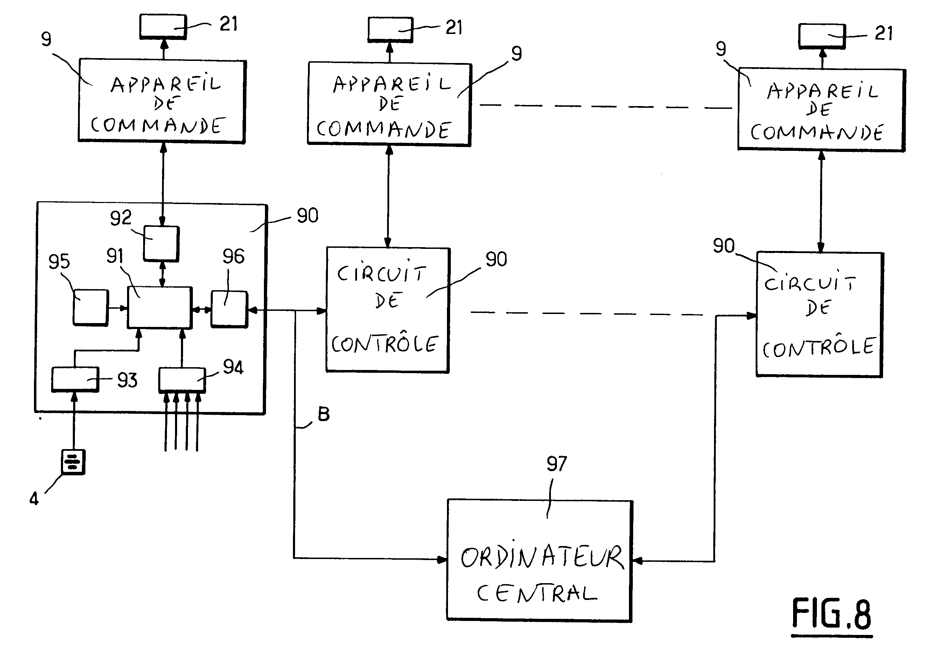

Avantageusement, l'appareil de commande selon l'invention peut être mis en oeuvre dans une installation comportant **n** éléments d'occultation **1**. Conformément à la **fig. 8**, chaque élément d'occultation **1** comporte, à l'intérieur de son tube **3** d'enroulement, un appareil de commande **9**, permettant de piloter l'organe moteur **21** associé. Chaque appareil de commande **9** est associé à un circuit **90** de contrôle en réseau comportant un microcontrôleur **91** à mémoire secourue assurant une gestion des ordres reçus et transmis. Le microcontrôleur **91** est associé à un circuit de communication **92** dialoguant avec le microcontrôleur **31** intégré à l'appareil de commande **9**. Le microcontrôleur **91** est associé, également, à un circuit interface **93** de commande localisée recevant des ordres d'au moins un interrupteur **4**, à un circuit interface **94** de réception d'ordres de commande spécifique provenant, par exemple, de blocs de commutation asservie, et à un circuit **95** d'adressage de l'appareil de commande **9** devant être piloté. Le microcontrôleur **91** de chaque circuit de contrôle agencé en réseau est destiné à dialoguer, par l'intermédiaire d'un circuit interface **96**, avec un ordinateur central **97**, à l'aide d'un bus de communication **B** reliant les divers circuits de contrôle **90** à l'ordinateur **97**.

## Revendications

1. Procédé pour commander au moins un organe moteur (**21**) de déplacement d'un élément d'occultation (**1**), comportant les étapes suivantes :
- détecter, par un capteur de position (**26**), la position occupée par l'organe moteur (**21**),
- enregistrer en mémoire (**Mr, M₁, M₂**) les valeurs de la position réelle occupée par l'organe moteur et d'une première (**P₁**) et d'une seconde positions (**P₂**) extrêmes de l'élément d'occultation (**1**),
- et à commander la rotation de l'organe moteur (**21**) en relation des ordres reçus d'au moins un moyen de commutation (**4**) et correspondant, soit à un ordre de commande d'un premier type, destiné à déplacer l'élément d'occultation en vue d'atteindre la première position extrême (**P₁**), soit à un ordre de commande d'un second type destiné à déplacer l'élément d'occultation en vue d'atteindre la seconde position extrême (**P₂**),
caractérisé en ce qu'il consiste à :
. enregistrer, lors de l'émission par le moyen de commutation (**4**) d'un ordre de commande de mémorisation, respectivement, du premier et du second types, la valeur de la mémoire (**Mr**) de position réelle dans une première (**M₁**) et une seconde (**M₂**) mémoires, correspondant respectivement à une première (**P₁**) et à une seconde (**P₂**) positions extrêmes de l'élément d'occultation,
. à enregistrer, lors de l'émission, par le moyen de commutation, d'un ordre d'enregistrement, la valeur de la mémoire de position réelle (**Mr**) dans au moins une mémoire dite de position intermédiaire (**Mi**), correspondant à une position intermédiaire (**Pi**) de l'élément d'occultation entre les deux positions extrêmes (**P₁, P₂**),
. et à piloter la rotation de l'organe moteur (**21**) lors de l'émission d'un ordre de commande de position intermédiaire, jusqu'à ce que l'élément d'occultation (**1**) occupe la position enregistrée dans la mémoire de position intermédiaire (**Mi**).

2. Procédé selon la revendication 1, caractérisé en ce que l'ordre de commande d'un premier ou d'un second type constitue un ordre de commande automatique destiné à déplacer l'élément d'occultation jusqu'à ce qu'il atteigne, respectivement, sa première position extrême ou sa seconde position extrême.

3. Procédé selon la revendication 1, caractérisé en ce que l'ordre de commande d'un premier ou d'un second type constitue un ordre de commande manuelle assurant le déplacement de l'élément d'occultation, en vue d'atteindre, respectivement, la première ou la seconde position extrême, tant que l'ordre de commande manuelle émis par le moyen de commutation apparaît, La disparition de l'ordre de commande manuelle provoquant la coupure de l'alimentation de l'organe moteur.

4. Procédé selon l'une des revendications 1 à 3, caractérisé en ce qu'il consiste, après l'apparition de chaque ordre de commande de l'organe moteur, à procéder à la détection de la rotation de l'organe moteur pour, soit couper l'alimentation de l'organe moteur si une absence de rotation est détectée ou soit poursuivre la séquence commandée si une rotation de l'organe moteur est décelée.

5. Procédé selon l'une des revendications 1 à 4, caractérisé en ce qu'il consiste, après la détection de la rotation de l'organe moteur, à scruter l'apparition d'un ordre de commande pour, soit poursuivre la séquence commandée en l'absence d'ordre de commande ou soit en présence d'un premier ordre de commande, à couper l'alimentation de l'organe moteur pendant un intervalle de temps déterminé, pour considérer l'ordre de commande comme un ordre d'arrêt d'urgence.

6. Procédé selon la revendication 1 ou 2, caractérisé en ce qu'il consiste, suite à un ordre de commande de positionnement de l'élément d'occultation dans la première ou la seconde position extrême ou la position intermédiaire, à comparer la valeur de la mémoire, respectivement première (**M₁**), seconde (**M₂**) ou intermédiaire (**Mi**) à la valeur de la mémoire (**Mr**) de position réelle et à couper l'alimentation de l'organe moteur lorsque la valeur de la mémoire de position réelle atteint la valeur de la mémoire première (**M₁**), seconde (**M₂**) ou intermédiaire (**Mi**).

7. Procédé selon la revendication 3 ou 6, caractérisé en ce qu'il consiste à couper l'alimentation de l'organe moteur pendant un intervalle de temps donné assurant un espacement de fonctionnement de l'organe moteur entre deux ordres successifs de commande.

8. Procédé selon l'une des revendications 3 à 7, caractérisé en ce qu'il consiste, après chaque coupure de l'alimentation de l'organe moteur, à faire intervenir une phase initiale d'attente (**41**) de durée choisie, pendant laquelle aucun ordre de commande, provenant du moyen de commutation, ne peut être pris en compte.

9. Procédé selon la revendication 2, caractérisé selon lequel les ordres de commande automatique et l'ordre de commande de position intermédiaire sont issus d'au moins un moyen de commutation (**4**) constitué par des blocs de commutation asservie.

10. Procédé selon la revendication 1 ou 2, caractérisé selon lequel les ordres de commande sont délivrés par au moins un moyen de commutation (**4**) formé par un interrupteur de commande.

11. Procédé selon les revendications 2, 3 et 10, caractérisé selon lequel l'ordre de commande automatique du premier ou du second type, ainsi que l'ordre de commande manuelle, respectivement du premier ou du second type, proviennent, respectivement, d'une première (**T₁**) ou d'une seconde (**T₂**) touche de l'interrupteur, la distinction entre les ordres de commande manuelle et automatique étant fonction d'un temps donné d'appui sur les touches du moyen de commutation (**4**).

12. Procédé selon la revendication 1, caractérisé selon lequel l'ordre de commande de la position intermédiaire et l'ordre d'enregistrement de la position intermédaire proviennent d'une troisième touche (**Ti**) de l'interrupteur, dont la distinction est fonction d'un temps d''appui déterminé sur la touche.

13. Procédé selon les revendications 1, 11 et 12, caractérisé selon lequel l'ordre de commande de mémorisation d'un premier ou d'un second type est constitué :
- par deux ordres de commande simultanés générés par la première (**T₁**) et la seconde touche (**T₂**) du moyen de commutation,
- et lorsque l'élément d'occultation occupe sa première (**P₁**) ou sa seconde (**P₂**) position extrême, par un ordre émis par la troisième touche (**Ti**) et suivi par un ordre de commande provenant de la première (**T₁**) ou de la seconde (**T₂**) touche.

14. Procédé selon l'une des revendications 1 à 13, caractérisé en ce qu'il consiste à commander, par l'intermédiaire d'un moyen de commutation (**4**) associé à un circuit interface, un nombre **n** d'organes moteurs.

15. Procédé selon l'une des revendications 1 à 13, caractérisé en ce qu'il consiste à commander un organe moteur (**21**) par L'intermédiaire de plusieurs moyens de commutation (**4**).

16. Appareil de commande pour au moins un organe moteur (**21**) de déplacement d'un élément d'occultation (**1**), l'appareil comportant :
- un capteur (**26**) de position ou de déplacement de l'organe moteur (**21**),
- et un dispositif de commande (**9**) comprenant des moyens de programmation assurant la gestion des ordres de commande provenant, via un circuit interface (**34**), d'au moins un moyen de commutation (**4**) et pemettant de piloter la rotation de l'organe moteur, en relation des ordres de commande reçus, par L'intermédiaire d'un circuit (**36**) de commande de commutation de puissance,
caractérisé en ce que le dispositif de commande (**9**) comprend :
- un microcontrôleur comportant au moins :
.. une mémoire (**Mr**) dite de position réelle, contenant constamment la valeur de la position occupée par l'élément d'occultation,
.. au moins une première (**M₁**) et une seconde (**M₂**) mémoires destinées à contenir, respectivement, la valeur de la première (**P₁**) et de la seconde (**P₂**) positions extrêmes de l'élément d'occultation,
.. et une mémoire de position intermédiaire (**Mi**), destinée à contenir la valeur d'une position donnée intermédiaire (**Pi**) de l'élément d'occultation (**1**), enregistrée lors de l'émission d'un ordre de commande provenant du moyen de commutation (**4**).

17. Appareil de commande selon la revendication 16, caractérisé en ce que le microcontrôleur (**31**) est à mémoire secourue et en ce que le moyen de commutation (**4**) comporte une batterie intégrée (**35**).

18. Appareil de commande selon la revendication 16, caractérisé en ce que le dispositif de commande (**9**) est monté à l'intérieur d'un boîtier (**8**) destiné à être inséré à l'intérieur d'un tube (**3**) d'enroulement de l'élément d'occultation (**1**).

19. Appareil de commande selon la revendication 18, caractérisé en ce qu'il comprend :
- un capteur de position (**26**) qui est formé d'au moins un détecteur optique (**28**) placé en relation d'un disque optique (**27**) calé en rotation avec un pignon de sortie (**24**),
- une tête fixe (**6**) apte à supporter le boîtier (**8**) du dispositif de commande et comportant une double roue dentée (**14, 15**) dont l'une (**15**) engrène avec le pignon de sortie (**24**) et l'autre (**14**) coopère avec une bague dentée annulaire (**16**) entourant la tête (**6**) et fixée en rotation au tube d'enroulement (**3**),
- et un organe moteur (**21**) associé à un réducteur (**20**), l'ensemble étant monté dans le prolongement du boîtier (**8**) et comportant un arbre de sortie (**19**) accouplé en rotation, par l'intermédiaire d'un flasque (**18**), au tube d'enroulement (**3**).

20. Appareil de commande selon la revendication 16, intégré dans une installation de commande de **n** éléments d'occultation (**1**), caractérisée en ce qu'elle comporte :
- pour chaque élément d'occultation (**1**) :
. un appareil de commande conforme à la revendication 16, inséré à l'intérieur d'un tube (**3**) d'enroulement de l'élément d'occultation associé,
. et un circuit (**90**) de contrôle en réseau comportant un microcontrôleur (**91**) à mémoire secourue assurant une gestion des ordres et associé :
.. à un circuit de communication (**96**) dialoguant avec le microcontrôleur (**31**) intégré à l'appareil de commande (**9**),
.. à au moins un circuit (**93**) intégré de commande localisée recevant des ordres de commande d'au moins un interrupteur,
.. à un circuit (**94**) interface de réception d'ordres de commande spécifique,
.. à un circuit (**95**) d'adressage de l'appareil de commande devant être piloté,
.. et un circuit (**96**) interface de réseau associé à un bus de communication (**B**),
- et au moins un ordinateur (**97**) dialoguant, par l'intermédiaire du bus de communication (**B**), à chaque circuit (**90**) de contrôle en réseau associé à chacun des éléments d'occultation (**1**).

## Patentansprüche

1. Verfahren zum Steuern mindestens eines Motors (21) zum Bewegen eines Verdunkelungselements (1), das folgende Schritte aufweist:
- Feststellung der Position, welche der Motor (21) einnimmt, mittels eines Positionsgebers (26),
- Eingabe der Werte der tatsächlichen Position des Motors und einer ersten (P₁) und einer zweiten (P₂) Endlage des Verdunkelungselements (1) in Speicher (Mr, M₁, M₂),
- und Steuerung der Drehbewegung des Motors (21) in Abhängigkeit von den von mindestens einer Umschaltvorrichtung (4) erhaltenen Befehlen und entsprechend entweder einem Steuerbefehl eines ersten Typs, der das Verdunkelungselement so bewegen soll, daß es die erste Endlage (P₁) erreicht, oder einem Steuerbefehl eines zweiten Typs, der das Verdunkelungselement so bewegen soll, daß es die zweite Endlage (P₂) erreicht,
dadurch gekennzeichnet, daß es darin besteht,
. bei der Ausgabe eines Speicherungssteuerbefehls jeweils des ersten bzw. des zweiten Typs den Wert des Speichers (Mr) der tatsächlichen Position in einen ersten (M₁) und einen zweiten Speicher (M₂) einzugeben, die jeweils einer ersten (P₁) bzw. einer zweiten Endlage (P₂) des Verdunkelungselements entsprechen,
. bei der Ausgabe eines Eingabebefehls durch die Umschaltvorrichtung den Speicherwert der tatsächlichen Position (Mr) in mindestens einen sogenannten Zwischenpositionsspeicher (Mi) einzugeben, der einer Zwischenposition (Pi) des Verdunkelungselements zwischen zwei Endlageen (P₁, P₂) entspricht,
. und die Drehbewegung des Motors (21) bei der Ausgabe eines Zwischenpositionssteuerbefehls zu steuern, bis das Verdunkelungselement (1) die in dem Zwischenpositionsspeicher (Mi) gespeicherte Position einnimmt.

2. Verfahren nach Anspruch 1, dadurch gekennzeichnet, daß der Steuerbefehl eines ersten oder zweiten Typs einen automatischen Steuerbefehl darstellt, der dazu bestimmt ist, das Verdunkelungselement so weit zu bewegen, bis es jeweils seine erste bzw. seine zweite Endlage erreicht.

3. Verfahren nach Anspruch 1, dadurch gekennzeichnet, daß der Steuerbefehl eines ersten oder zweiten Typs einen manuellen Steuerbefehl darstellt, der das Verdunkelungselement so bewegt, daß es jeweils die erste oder zweite Endlage erreicht, solange der von der Umschaltvorrichtung ausgegebene manuelle Steuerbefehl erscheint, wobei beim Verschwinden des manuellen Steuerbefehls die Stromversorgung des Motors unterbrochen wird.

4. Verfahren nach einem der Ansprüche 1 bis 3, dadurch gekennzeichnet, daß es darin besteht, nach dem Erscheinen jedes Steuerbefehls des Motors die Drehbewegung des Motors abzufragen, um entweder die Stromversorgung des Motors zu unterbrechen, wenn die Abfrage ergibt, daß der Motor nicht dreht, oder die eingestellte Folge fortzusetzen, wenn festgestellt wird, daß der Motor dreht.

5. Verfahren nach einem der Ansprüche 1 bis 4, dadurch gekennzeichnet, daß es darin besteht, daß es nach Feststellen der Motordrehung das Erscheinen eines Steuerbefehls abfragt, um entweder die eingestellte Folge ohne einen Steuerbefehl fortzusetzen, oder bei Vorhandensein eines ersten Steuerbefehls die Stromversorgung des Motors für einen bestimmten Zeitraum zu unterbrechen und den Steuerbefehl als Not-Aus-Befehl anzusehen.

6. Verfahren nach Anspruch 1 oder 2, dadurch gekennzeichnet, daß es darin besteht, auf einen Steuerbefehl zur Positionierung des Verdunkelungselements hin in der ersten oder zweiten Endlage oder in der Zwischenposition den Wert des Speichers, nämlich des ersten (M₁), des zweiten (M₂) oder des Zwischenspeichers (Mᵢ) mit dem Wert des Speichers (Mr) der tatsächlichen Position zu vergleichen und die Stromversorgung des Motors zu unterbrechen, wenn der Wert des Speichers der tatsächlichen Position den Wert des ersten (M₁), zweiten (M₂) oder Zwischenspeichers (Mi) erreicht.

7. Verfahren nach Anspruch 3 oder 6, dadurch gekennzeichnet, daß es darin besteht, die Stromversorgung des Motors für eine gegebene Zeit zu unterbrechen, und so einen zeitlichen Abstand im Betrieb des Motors zwischen zwei aufeinanderfolgenden Steuerbefehlen herstellt.

8. Verfahren nach einem der Ansprüche 3 bis 7, dadurch gekennzeichnet, daß es darin besteht, nach jeder Stromunterbrechung des Motors eine Anfangswartephase (41) ausgewählter Länge vorzusehen, während der kein von der Umschaltvorrichtung kommender Steuerbefehl berücksichtigt werden kann.

9. Verfahren nach Anspruch 2, dadurch gekennzeichnet, daß die automatischen Steuerbefehle und der Steuerbefehl für die Zwischenposition von mindestens einer Umschaltvorrichtung (4) stammen, die aus geregelten Umschalteinheiten besteht.

10. Verfahren nach Anspruch 1 oder 2, dadurch gekennzeichnet, daß die Steuerbefehle von mindestens einer Umschaltvorrichtung (4) ausgegeben werden, die von einem Steuerschalter gebildet wird.

11. Verfahren nach den Ansprüchen 2, 3 und 10, dadurch gekennzeichnet, daß der automatische Steuerbefehl des ersten oder zweiten Typs sowie der manuelle Steuerbefehl des jeweils ersten bzw. zweiten Typs jeweils von einer ersten (T₁) oder einer zweiten (T₂) Taste des Schalters kommen, wobei die Unterscheidung zwischen manuellem und automatischem Steuerbefehl abhängig ist von einer gegebenen Dauer des Drückens auf die Tasten der Umschaltvorrichtung (4).

12. Verfahren nach Anspruch 1, dadurch gekennzeichnet, daß der Steuerbefehl der Zwischenposition und der Befehl zur Eingabe der Zwischenposition von einer dritten Taste (Ti) des Schalters kommen, wobei dessen Erkennen abhängig ist von einer bestimmten Dauer des Drückens auf die Taste.

13. Verfahren nach den Ansprüchen 1, 11 und 12, dadurch gekennzeichnet, daß der Speicherungssteuerbefehl eines ersten oder eines zweiten Typs aus
- zwei durch die erste (T₁) und die zweite Taste (T₂) der Umschaltvorrichtung erzeugten, simultanen Steuerbefehlen und,
- wenn sich das Verdunkelungselement in seiner ersten (P₁) oder seiner zweiten (P₂) Endlage befindet, aus einem Befehl besteht, der von der dritten Taste (Ti) kommt und gefolgt ist von einem Steuerbefehl, der von der ersten (T₁) oder zweiten (T₂) Taste kommt.

14. Verfahren nach einem der Ansprüche 1 bis 13, dadurch gekennzeichnet, daß es darin besteht, daß es mittels einer mit einer Anpassungsschaltung verbundenen Umschaltvorrichtung (4) eine Anzahl n Motoren steuert.

15. Verfahren nach einem der Ansprüche 1 bis 13, dadurch gekennzeichnet, daß es darin besteht, daß es einen Motor (21) mittels mehrerer Umschaltvorrichtungen (4) steuert.

16. Steuergerät für mindestens einen Motor (21) zum Bewegen eines Verdunkelungselements (1), wobei das Gerät folgende Teile umfaßt:
- einen Sensor (26), der die Position oder Bewegung des Motors (21) erfaßt,
- und eine Steuervorrichtung (9), die Programmiervorrichtungen umfaßt, welche die Führung der Steuerbefehle sicherstellen, die über eine Anpassungsschaltung (34) von mindestens einer Umschaltvorrichtung (4) kommen und die Steuerung der Drehbewegung des Motors in Abhängigkgeit von den erhaltenen Steuerbefehlen mit Hilfe eines Steuerschaltkreises (36) zur Leistungsumschaltung ermöglichen,
dadurch gekennzeichnet, daß die Steuervorrichtung (9) umfaßt:
- einen Mikrosteuerbaustein, der mindestens umfaßt:
.. einen Speicher (Mr), der ein sogenannter Speicher für die tatsächliche Position ist und ständig den Wert der Position des Verdunkelungselements enthält,
.. mindestens einen ersten (M₁) und einen zweiten (M₂) Speicher, die dazu bestimmt sind, jeweils den Wert der ersten (P₁) und der zweiten (P₂) Endlage des Verdunkelungselements zu enthalten,
.. und einen Speicher für die Zwischenposition (Mi), dazu bestimmt, den Wert einer gegebenen Zwischenposition (Pi) des Verdunkelungselements (1) zu enthalten, der bei der Ausgabe eines von der Umschaltvorrichtung (4) kommenden Steuerbefehls eingegeben wird.

17. Steuergerät nach Anspruch 16, dadurch gekennzeichnet, daß der Mikrosteuerbaustein (31) ein Baustein mit Hilfsspeicher ist, und daß die Umschaltvorrichtung (4) eine eingebaute Batterie (35) aufweist.

18. Steuergerät nach Anspruch 16, dadurch gekennzeichnet, daß die Steuervorrichtung (9) in einem Gehäuse (8) montiert ist, das in eine Röhre (3) zum Aufrollen des Verdunkelungselements (1) eingesetzt wird.

19. Steuergerät nach Anspruch 18, dadurch gekennzeichnet, daß es umfaßt:
- einen Positionsgeber (26), der aus mindestens einem Optiksensor (28) gebildet wird, der verbunden mit einer optischen Scheibe (27), die in Drehung mit einem Abtriebsritzel (24) verkeilt ist, angeordnet ist,
- einen unbeweglichen Kopf (6), der geeignet ist, das Gehäuse (8) der Steuervorrichtung zu tragen, und der ein doppeltes Zahnrad (14, 15) umfaßt, von denen eines (15) in das Abtriebsritzel (24) eingreift und das andere (14) mit einem ringförmigen Zahnring (16) zusammenwirkt, welcher den Kopf (6) umgibt und in Drehung an der Aufrollröhre (3) befestigt ist,
- und einen Motor (21), der mit einem Untersetzungsgetriebe (20) verbunden ist, wobei diese Einheit in der Verlängerung des Gehäuses (8) montiert ist und eine Abtriebswelle (19) aufweist, die in Drehung über einen Flansch (18) an die Aufrollröhre (3) gekoppelt ist.

20. Steuergerät nach Anspruch 16, eingebaut in eine Steuervorrichtung für n Verdunkelungselemente (1), dadurch gekennzeichnet, daß es
- für jedes Verdunkelungselement (1) umfaßt:
. ein Steuergerät entsprechend Anspruch 16, eingesetzt in eine Aufrollröhre (3) für das entsprechende Verdunkelungselement,
. und einen Netzkontrollschaltkreis (90), der einen Mikrosteuerbaustein (91) mit Hilfsspeicher umfaßt, die Befehle steuert und verbunden ist mit:
.. einer Datenübertragungsschaltung (96), die im Dialog steht mit dem in das Steuergerät (9) integrierten Mikrosteuerbaustein (31),
.. mindestens einer integrierten Schaltung (93) zur lokalisierten Steuerung, die Steuerbefehle von mindestens einem Schalter empfängt,
.. einer Anpassungsschaltung (94) zum Empfang von Befehlen spezifischer Steuerung,
.. einer Adressierungsschaltung (95) des zu steuernden Steuergeräts,
.. und einer mit einem Datenübertragungsbus (B) verbundenen Netzanpassungsschaltung (96),
- und mindestens einem Rechner (97), der mittels eines Datenübertragungsbusses (B) mit allen Netzkontrollschaltungen (90) im Dialog steht, die mit den jeweiligen Verdunkelungselementen (1) verbunden sind.

## Claims

1. Method for controlling at least one drive member (21) for moving an occulting element (1), said method consisting in the following steps:
- detecting, by a position sensor (26), the position occupied by the drive member (21),
- storing in memories (Mr, M₁, M₂) the values of the true position occupied by the drive member and of a first (P₁) and second extreme position (P₂) of the occulting element (1), and
- controlling the rotation of the drive member (21) in relation to the commands received from at least one switching means (4) and corresponding either to a control command of a first type, intended to move the occulting element to reach its first extreme position (P₁), or to a control command of a second type intended to move the occulting element to reach its second extreme position (P₂),
characterized in that it consists in:
- recording, when a command is emitted by the switching means (4) respectively from the first and second types, for storing the value of the true position memory (Mr) in first (M₁) and second (M₂) memories, corresponding respectively to first (P₁) and second (P₂) extreme positions of the occulting element,
- recording, during said emission, by using switching means, a storing command, the value of the true position memory (Mr) in at least one memory called intermediate position memory (Mi) corresponding to an intermediate position (Pi) of the occulting element between the two extreme positions (P₁, P₂), and
- controlling the rotation of the drive member (21) when a control command is emitted to control the intermediate position until the occulting element (1) occupies the position stored in the intermediate position (M₁).

2. Method according to claim 1, characterized in that the control command of a first or second type constitutes an automatic control command intended to move the occulting element until it reaches respectively its first extreme position or its second extreme position.

3. Method according to claim 1, characterized in that the control command of a first or second type constitutes a manual control command urging the occulting element to move with a view to reaching, respectively the first or second extreme position, as long as the manual control command sent by the switching means is present, the disappearance of the manual control command causing the drive member supply to cut out.

4. Method according to one of claims 1 to 3, characterized in that it consists, after the appearance of each drive member control command, in detecting the rotation of the drive member, to either interrupt the supply to the drive member, if non-rotation is detected, or to continue the ordered sequence if a rotation of the drive member is detected.

5. Method according to one of claims 1 to 4, characterized in that it consists, after the detection of the rotation of the drive member, in scanning the appearance of a control command to either continue the ordered sequence if no command appears or, if a first control command appears, to interrupt the motor power supply for a preset time interval, in order to consider the control command as an emergency stop command.

6. Method according to claim 1 or 2, characterized in that it consists, after a control command to position the occulting element in the first or second extreme position or in the intermediate position, in comparing the value of the memory, respectively first (M₁), second (M₂) or intermediate (Mi) memory, to the value of the true position memory (Mr) and in interrupting the supply to the drive member when the value of the true position memory reaches the value of the first (M₁), second (M₂) or intermediate (Mi) memory.

7. Method according to claim 3 or 6, characterized in that it consists in interrupting the supply to the drive member for a given time interval in order to ensure a pause in the operation of the drive member between two successive control commands.

8. Method according to one of claims 3 to 7, characterized in that it consists, after each interruption of the drive member, in introducing an initial waiting step (41) of selected duration, during which no control command from the switching means can be taken into account.

9. Method according to claim 2, characterized in that the automatic control commands and the intermediate position command are given by at least one switching means (4) constituted by interlocked switching units.

10. Method according to claim 1 or 2, characterized in that the control commands are delivered by at least one switching means (4) consisting of a control switch.

11. Method according to claims 2, 3 and 10, characterized in that the first or second type automatic control command, as well as the manual control command, of respectively the first or second type, come respectively from a first (T₁) or a second (T₂) key of the switch, the distinction between the manual and automatic control commands being a function of a given time during which the keys of the switching means (4) are pressed.

12. Method according to claim 1, characterized in that the intermediate position control command and the intermediate position store command are sent by a third key (Ti) of the switch, the distinction of which is a function of a preset pressing time during which the key is pressed.

13. Method according to claims 1, 11 and 12, characterized in that a first or second type of store command control is made up of:
- two simultaneous control commands generated by the first (T₁) and the second (T₂) key of the switching means, and
- when the occulting element occupies its first (P₁) or second (P₂) extreme position, due to a command issued by the third key (Ti) and followed by a control command issued from the first (T₁) or the second (T₂) key.

14. Method according to one of claims 1 to 13, characterized in that it consists in controlling, via a switching means (4) associated with an interface circuit, a number n of drive members.

15. Method according to one of claims 1 to 13, characterized in that it consists in controlling a drive member (21) from a plurality of switching means (4).

16. Device for controlling at least one drive member (21) for moving an occulting element (1), said device comprising:
- a sensor (26) of the position or displacement of the drive member (21),
- and a control device (9) comprising programming means for controlling the commands issued, via an interface circuit (34), from at least one switching means (4) and enabling the control of the rotation of the drive member, in accordance with control commands received, via a power switching command circuit,
characterized in that the control device (9) comprises:
- a microcontroller having at least:
.. a memory (Mr) called true position memory, containing constantly the value of the position occupied by the occulting element,
.. at least a first (M₁) and a second (M₂) memory intended to contain respectively, the value of the first (P₁) and of the second (P₂) extreme positions of the occulting element, and
.. an intermediate position memory (Mi), intended to contain the value of a given intermediate position (Pi) of the occulting element (1), recorded when a control command is issued by the switching means (4).

17. Control apparatus according to claim 16, characterized in that the microcontroller (31) has a battery-backed memory and in that the switching means (4) has a built-in battery (35).

18. Control apparatus according to claim 16, characterized in that the control device (9) is mounted inside a case (8) designed to be inserted inside a tube (3) for winding the occulting element (10).

19. Control apparatus according to claim 18, characterized in that it comprises:
- a position sensor (26) which is made up of at least one optical detector (28) placed relatively to an optical disk (27) locked in rotation with an output gear (24),
- a fixed head (6) capable of supporting the case (8) of the control device and comprising a double gearwheel (14, 15) of which one (15) meshes with the output gear (24) and the other (14) cooperates with an annular toothed ring (16) surrounding the head (6) and fixed in rotation to the winding tube (3),
- and a drive member (21) associated with a reduction gear (20), the assembly being mounted in extension of the case (8) and comprising an output shaft (19) coupled in rotation, via a flange (18), to the winding tube (3).

20. Control apparatus according to claim 16, integrated in a control installation of n occulting elements (1), characterized in that it comprises:
- for each occulting element (1):
. a control apparatus according to claim 16, inserted inside a winding tube (3) of the associated occulting element, and
. a network type control circuit (90) comprising a microcontroller (91) with a battery-backed memory ensuring the control of the commands and associated with:
.. a communication circuit (96) conversant with the microcontroller (31) integrated with the control apparatus (9),
.. at least one localized integrated control circuit receiving commands from at least one switch,
.. an interface circuit (94) receiving specific control commands,
.. a circuit (95) for addressing the control apparatus to be driven, and
.. a network interface circuit (96) associated with a communications bus (B),
- and at least one computer (97) communicating via the communications bus (B) with each network control circuit (90) associated with each of the occulting elements (1).
